# EUROPÄISCHE PATENTSCHRIFT

(11) **EP 0 501 286 B1**
(45) Veröffentlichungstag und Bekanntmachung des Hinweises auf die Patenterteilung: **14.06.1995**
(21) Anmeldenummer: 92102710.8
(22) Anmeldetag: 19.02.1992
(51) Int. Cl.: G01F 1/10, G01F 1/12

(54) **Woltmannzähler**
Woltmann meter
Compteur Woltmann

(30) Priorität: 25.02.1991 DE 4105840
(43) Veröffentlichungstag der Anmeldung: 02.09.1992
(73) Patentinhaber: H. MEINECKE AG, D-30868 Laatzen (DE)
(72) Erfinder: Pieper, Herbert, Prof. Dr., W-3005 Hemmingen 1 (DE)
(74) Vertreter: Brümmerstedt, Hans Dietrich, Dipl.-Ing.

(56) Entgegenhaltungen:
- EP-A- 0 076 189
- US-A- 3 766 780
- US-A- 3 811 323
- US-A- 3 999 432

## Beschreibung

Die Erfindung bezieht sich auf einen Woltmannzähler.

Die EP-PS 0 076 189 B1 zeigt ein Durchflußmeßgerät für ein fluides Medium, welches in einem rohrförmigen, von dem unter einem bestimmten Druck stehenden zu messenden fluiden Medium zu durchströmenden Leitungselement eine Turbine aufweist, die am Umfang einer zylindrischen Nabe Flügel trägt und drehbar sowie axial beweglich gelagert ist zwischen zwei feststehenden Verkleidungen, von denen die eine strömungsaufwärts und die andere strömungsabwärts angeordnet ist. Es sind ferner Mittel vorgesehen, um eine Zone mit einem Unterdruck von annähernd konstantem Wert unabhängig von der Axialstellung der Nabe auf der einen Seite einer Querfläche des strömungsaufwärts liegenden Endes der Nabe zu erzeugen, wobei die strömungsabwärts liegende Verkleidung einen hohlzylindrischen Teil umfaßt, in welchen das strömungsabwärts liegende Ende der genannten Nabe mit Spiel eindringt, um auf der Seite der Querfläche des strömungsabwärts liegenden Endes der Nabe eine Überdruckzone zu erhalten, so daß die hydrodynamische Schubkraft auf die Turbine, welche aus der Strömung des fluiden Mediums resultiert, stets durch die Differenz zwischen dem genannten Überdruck und dem genannten Unterdruck ausgeglichen wird, so daß das genannte strömungsabwärts liegende Ende der Nabe eine Durchmesservergrößerung gegenüber dem übrigen Teil der genannten Nabe aufweist. Dabei bestimmt die Kombination der Relativprofile des strömungsabwärts liegenden verbreiterten Endes der Nabe und der strömungsabwärts liegenden Verkleidung den Überdruck in der Weise, daß er abnimmt, wenn die Nabe sich in Axialrichtung gegen die strömungsaufwärts liegende Verkleidung bewegt.

Je nach Fließgeschwindigkeit der Flüssigkeit ändern sich die Kräfte in Strömungsrichtung und erfordern eine entsprechende Änderung der entgegengerichteten Staudruckkraft. Dies wird durch die Axialbewegung des Flügelrades erreicht. Bei dieser bekannten Vorrichtung sind vergleichsweise große Axialbewegungen des Flügelrades erforderlich, um den axialen Schwebezustand des Flügels zu erreichen. Darüber hinaus sind die Regelverhältnisse ziemlich instabil.

Aufgabe der Erfindung ist es, diese bekannte Vorrichtung so zu verbessern, daß ungleich geringere Axialbewegungen des Flügelrades zu verzeichnen sind und darüber hinaus stabilere Regelverhältnisse erreicht werden.

Erfindungsgemäß wird diese Aufgabe mittels eines Woltmannzählers gelöst, der ein in einem Gehäuse drehbar gelagertes Flügelrad besitzt, welches zwischen einer feststehenden stromauf und einer feststehenden stromab liegenden Verkleidung axial bewegbar ist und eine eine Ringkammer bildende Nabe aufweist, wobei die Ringkammer in radialer Richtung von einem Zylindermantel und einem Mittelteil der Nabe begrenzt ist und der Zylindermantel unter Bildung eines Ringspaltes ein hohlzylinderförmiges Teil einer Ausbuchtung der stromab liegenden Verkleidung umfaßt, so daß die den Ringspalt durchsetzende Flüssigkeit einen die Nabe belastenden Überdruck hervorruft, der den auf das Flügelrad wirkenden hydrodynamischen Druck ausgleicht, wobei in der stromab liegenden Verkleidung zumindest eine Öffnung vorgesehen ist, über welche die die Ringkammer der Nabe verlassende Flüssigkeit abströmt und auf dem Mittelteil ein Verschlußglied angeordnet ist, welches in der die Verbindung zwischen der Ringkammer und der stromab liegenden Verkleidung unterbrechenden Schließstellung gegen einen mit der Verkleidung verbundenen Sitz annäherbar ist, wobei an dem Zylindermantel ein in die Ringkammer hineinragender Ring vorgesehen ist und am Außenumfang des hohlzylinderförmigen Teils der stromab liegenden Verkleidung ein Gegenring angeordnet ist.

Die US-A 3 766 780 offenbart einen Woltmannzähler, bei dem einige Merkmale des Anspruchs 1 der vorliegenden Erfindung zufällig vorhanden sind. Das Problem der Axialschubentlastung des Flügelrades wird hier aber mit völlig anderen Mitteln gelöst.

Durch die Öffnung bzw. Öffnungen in der stromab liegenden Verkleidung, über welche die die Ringkammer der Nabe verlassende Flüssigkeit abströmt sowie die Anordnung eines Verschlußgliedes im Mittelteil mit dem dazugehörigen Sitz und die beiden Ringe im Ringspalt wird ein geregelter Durchfluß sichergestellt, welcher indirekt eine Regelung des Druckes, der Nabenaxialkraft und der Stellung des Flügelrades zur Folge hat. Das Flügelrad wird auf diese Weise zum Regler selbst. Darüber hinaus bedingt diese besondere Anordnung auch eine erhebliche Verkleinerung der Axialbewegungen des Flügelrades sowie stabilere Regelverhältnisse.

Durch die Anordnung von mindestens zwei Drosselstellen wird ein erweiterter Einstellbereich für die Durchflußregelung und eine Erhöhung der Stabilisierung in Verbindung mit geringeren Axialbewegungen des Flügelrades zur Erlangung des axialen Schwebezustandes erreicht.

Zweckmäßig sind die beiden Ringe in axialer Richtung zueinander versetzt.

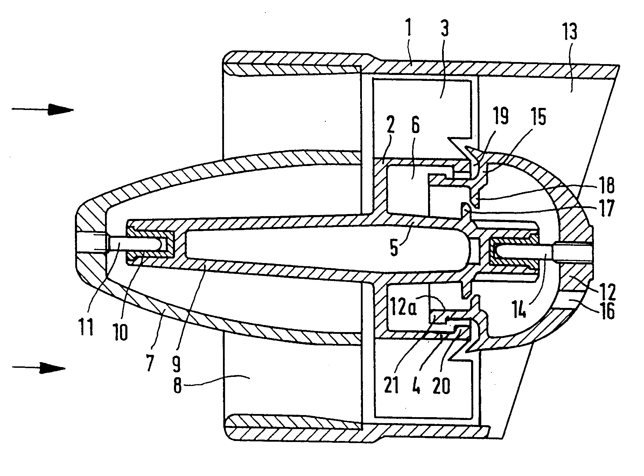

Ein Ausführungsbeispiel des Woltmannzählers gemäß der Erfindung ist in der Zeichnung in Form eines Teilschnittes veranschaulicht.

Mit 1 ist ein etwa Zylinderform aufweisendes Gehäuse bezeichnet, in welchem das Flügelrad 2 - bestehend aus dem Schaufelkranz 3 und der Nabe - drehbar gelagert ist. Die Nabe besteht dabei aus einem Zylindermantel 4 und einem Mittelteil 5, der in der Zeichnung nach rechts orientiert ist. Die Teile 4 und 5 der Nabe begrenzen dabei eine Ringkammer 6.

Mit 7 ist eine stromauf liegende Verkleidung angedeutet, welche über in radialer Richtung sich erstreckende Stützen 8 mit dem Gehäuse 1 verbunden ist. An den Mittelteil 5 schließt sich ein etwa kegelstumpfförmiger Teil 9 mit einem Lager 10 an, in welches ein mit der Verkleidung 7 verbundener Zapfen 11 mit geringem radialen Spiel eingreift.

Mit 12 ist eine stromab liegende Verkleidung bezeichnet, welche etwa die Form einer Glocke aufweist und über Stützen 13 mit dem Gehäuse 1 in Verbindung steht. Der Mittelteil 5 der Nabe weist an seinem stromab liegenden Ende eine Schnecke auf, die über ein in der Zeichnung nicht weiter dargestelltes Schneckenrad in herkömmlicher Weise auf die Drehwelle für das Zählwerk des Woltmannzählers einwirkt.

Die Schnecke ist auf der einen Seite auf einem Zapfen 14 gelagert, der mit der Verkleidung 12 verbunden ist. Über das Lager 10 und das Lager mit dem Zapfen 14 ist das Flügelrad 2 in Grenzen axial verschiebbar.

Die Verkleidung 12 hat etwa die Form einer Glocke, die im Randbereich mit einer Ausbuchtung 15 versehen ist, in welche der Zylindermantel 4 der Nabe unter Bildung eines Spaltes 19 eingreift.

Nach einem wesentlichen Merkmal der Erfindung ist in der Verkleidung 12 eine Öffnung 16 vorgesehen, über welche die die Ringkammer 6 der Nabe verlassende Flüssigkeit ausströmen kann. Es liegt im Rahmen der Erfindung, auch mehr als eine einzige Öffnung 16 vorzusehen.

Auf dem Mittelteil 5 der Nabe ist ein Verschlußglied 17 in Form einer Scheibe vorgesehen, welches in der die Verbindung zwischen der Ringkammer 6 und der stromab liegenden Verkleidung 12 unterbrechenden Schließstellung gegen einen mit der Verkleidung 12 verbundenen Sitz 18 annäherbar ist.

Im Bereich des Spaltes 19 ist an dem Zylindermantel 4 der Nabe ein in die Ringkammer 6 hineinragender Ring 20 vorgesehen. Darüber hinaus ist am Außenumfang eines das Austrittsende des Ringspaltes 19 radial begrenzenden hohlzylinderförmigen Teiles 12a der stromab liegenden Verkleidung 12 ein Gegenring 21 angeordnet.

Die Arbeitsweise des Woltmannzählers ist die folgende:

Dem Zähler wird die zu messende Flüssigkeit in Richtung der in der Zeichnung angedeuteten Pfeile zugeführt. Die in den Schaufelkranz des Flügelrades 2 eintretende Flüssigkeit bewirkt eine Drehbewegung desselben, wobei bei der Umströmung des Flügelrades 2 hydraulische Kräfte in axialer Richtung auftreten. Diese Axialkräfte entstehen durch die Druckdifferenz zwischen Vorder- und Hinterseite des Schaufelkranzes des Flügelrades 2. Durch den hierdurch auftretenden Impuls wird das Flügelrad 2 in der Zeichnung nach rechts bewegt. Dabei tritt die Flüssigkeit durch den Ringspalt 19 und baut dort einen Gegendruck auf, der das Flügelrad 2 entgegen der Strömungsrichtung in der Zeichnung nach links bewegt, bis ein Gleichgewichtszustand der beiden Druckkräfte hergestellt ist. Die Flüssigkeit strömt dann durch den Spalt zwischen dem Verschlußglied 17 und dem Sitz 18 und wird dann über die Öffnung 16 nach außen abgeleitet. Durch die Regelung dieser beiden Spalte sind nur vergleichsweise geringe Axialbewegungen des Flügelrades 2 zu verzeichnen. Der geregelte Durchfluß bewirkt eine Regelung der Druckverhältnisse, der auf das Flügelrad 2 wirkenden Axialkraft sowie der Stellung desselben.

## Patentansprüche

1. Woltmannzähler mit einem in einem Gehäuse (1) drehbar gelagerten Flügelrad (2), welches zwischen einer feststehenden stromauf und einer feststehenden stromab liegenden Verkleidung (7, 12) axial bewegbar ist und eine eine Ringkammer (6) bildende Nabe aufweist, wobei die Ringkammer (6) in radialer Richtung von einem Zylindermantel (4) und einem Mittelteil (5) der Nabe begrenzt ist und der Zylindermantel (4) unter Bildung eines Ringspaltes (19) ein hohlzylinderförmiges Teil (12a) einer Ausbuchtung (15) der stromab liegenden Verkleidung (12) umfaßt, so daß die den Ringspalt (19) durchsetzende Flüssigkeit einen die Nabe belastenden Überdruck hervorruft, der den auf das Flügelrad (2) wirkenden hydrodynamischen Druck ausgleicht, wobei in der stromab liegenden Verkleidung (12) zumindest eine Öffnung (16) vorgesehen ist, über welche die die Ringkammer (6) der Nabe verlassende Flüssigkeit abströmt und auf dem Mittelteil (5) ein Verschlußglied (17) angeordnet ist, welches in der die Verbindung zwischen der Ringkammer (6) und der stromab liegenden Verkleidung (12) unterbrechenden Schließstellung gegen einen mit der Verkleidung (12) verbundenen Sitz (18) annäherbar ist, wobei an dem Zylindermantel (4) ein in die Ringkammer (6) hineinragender Ring (20) vorgesehen ist und am Außenumfang des hohlzylinderförmigen Teils (12a) der stromab liegenden Verkleidung (12) ein Gegenring (21) angeordnet ist.

2. Zähler nach Anspruch 1, dadurch gekennzeichnet, daß die beiden Ringe (20, 21) in axialer Richtung zueinander versetzt sind.

## Claims

1. Hydrometric vane with an impeller wheel (2) mounted to rotate in a housing (1), where the said impeller wheel is axially displaceable between a fixed upstream and a fixed downstream casing (7,12) and has a hub forming a toroidal chamber (6) limited in the radial direction by a cylinder shell (4) and a centre part (5) of the hub, the cylinder shell (4) forming a ring-like gap (19) with a hollow cylindrical part (12a) of a bulge (15) of the downstream casing (12), such that the fluid moving through the ring-like gap (19) provokes a pressure exerted on the hub which compensates for the hydrodynamic pressure acting on the impeller wheel (2), where the downstream casing (12) has at least one opening (16) through which flows out the fluid leaving the toroidal chamber (6) of the hub, and on the centre part (5) is arranged a closing element (17) which in the closed position can be brought against a seat (18) connected to the casing (12) breaking the connection between the toroidal chamber (6) and the downstream casing (12), where on the cylinder casing (4) is a ring (20) projecting into the toroidal chamber (6) and on the outside of the hollow cylindrical part (12a) of the downstream casing (12) is arranged a counter-ring (21).

2. Vane in accordance with Claim 1, characterised in that the two rings (20,21) are axially offset against each other.

## Revendications

1. Compteur de Voltmann comportant, montée rotative dans un carter (1), une roue (2) qui est mobile axialement entre un carénage fixe amont (7) et un carénage fixe aval (12) et qui présente un moyeu formant une chambre annulaire (6), la chambre annulaire (6) étant limitée radialement par une enveloppe cylindrique (4) et par une partie centrale (5) du moyeu, l'enveloppe cylindrique (4) renfermant, entre la formation d'une fente annulaire (19), une partie de forme cylindrique creuse (12a) d'une courbure (15) de l'enveloppe aval (12) de manière que le liquide passant dans la fente annulaire (19) engendre une surpression chargeant le moyeu qui équilibre la pression hydrodynamique agissant sur la roue (2), dans le carénage (12) placé en aval étant prévue au moins une ouverture (16) par laquelle le liquide quittant la chambre annulaire (6) du moyeu coule en aval et, sur la partie centrale (5) étant disposé un élément de fermeture (17) qui peut être rapproché dans la position de fermeture interrompant la liaison entre la chambre annulaire (6) et le carénage (12) situé en aval contre un siège (18) combiné avec le carénage (12), à l'enveloppe cylindrique (4), étant prévue une bague (20) en saillie à l'intérieur dans la chambre annulaire (6), et sur le pourtour extérieur de la partie de forme cylindrique creuse (12a) du carénage (12) situé en aval étant prévue une bague inverse (21).

2. Compteur suivant la revendication 1, caractérisé en ce que les deux bagues (20, 21) sont axialement décalées l'une de l'autre.
